# EUROPEAN PATENT SPECIFICATION

(11) **EP 2 164 669 B1**
(45) Date of publication and mention of the grant of the patent: **29.07.2020**
(21) Application number: 07852416.2
(22) Date of filing: 19.09.2007
(51) Int. Cl.: B23K 9/12, B23K 9/23, B23K 35/02

(54) **SYSTEM AND METHOD FOR SHORT ARC WELDING**
SYSTEM UND VERFAHREN FÜR KURZLICHTBOGENSCHWEISSEN
SYSTÈME ET PROCÉDÉ DE SOUDAGE À ARC COURT

(30) Priority: 23.05.2007 US 752433
(43) Date of publication of application: 24.03.2010
(60) Divisional application: 19217222.9
(73) Proprietor: Lincoln Global, Inc., Santa Fe Springs, CA 90670 (US)
(72) Inventor: NARAYANAN, Badri, Highland Heights, OH 44143 (US); SOLTIS, Patrick, T., Shaker Heights, OH 44120-1263 (US); MYERS, Russell, K., Hudson, OH 44236 (US); STEWART, Eric, Girard, PA 16417 (US)
(74) Representative: Grosse Schumacher Knauer von Hirschhausen
(86) International application number: PCT/US2007/020345
(87) International publication number: WO 2008/150274

(56) References cited:
- EP-A2- 1 779 957
- JP-A- 09 038 772
- US-A- 6 114 656

## Description

### FIELD OF THE INVENTION

The present invention relates a method of welding a workpiece, and to a welding apparatus, and thus generally to the art of electric arc welding and more particularly to an improved short arc welding system to be used in welding liquefied natural gas ("LNG") storage tanks, methods of welding LNG storage tanks with self-shielded flux cored arc welding (FCAW-S) electrodes.

### BACKGROUND

Presently, there are no commercial solutions or methods for semi-automatically, circumferentially, welding high strength pipes and pipelines with a gas-less or self-shielding welding process. This is because the traditional technologies used for gas-less or self-shielding welding applications have inherent limitations in high strength welding applications.

In using gas-less or self-shielding welding electrodes various chemicals are used in the electrode to react with the oxygen and nitrogen in the atmosphere to keep these components out of the weld. These chemicals are used in such a quantity so as to sufficiently prevent the oxygen or nitrogen from deteriorating the weld quality. However, while these chemicals, such as titanium and aluminum, make the welds stronger, they also have the adverse effects of making the welds brittle. This brittleness prevents gas-less or self-shielding welding methods from being used in many high strength welding applications, such as pipeline welding, in which it is often required that the weld the weld strength be sufficient to satisfy the requirements for welding American Petroleum Institute (API) Grade X-80 line pipe, or higher.

Further, although there exists methods for meeting these weld requirements using gas-shielded welding methods, these methods also have drawbacks which make them less than desirable. Namely, current methods and systems for welding high strength pipes and pipelines (along with other applications) using gas-shielding methods require costly and time consuming set ups to protect the welding area from the atmosphere and elements. This is particularly the case in pipeline applications, where the welds are often taking place outside in difficult environmental conditions.

Additionally, in the area of liquefied natural gas (LNG) storage tanks, there is presently no commercial system or method using a semi-automatic gas-less process which efficiently and effectively meets the stringent requirements needed for welding LNG storage tanks.

Because of a growing interest in the use of natural gas (methane) as a source of energy, there is a growing industry related to the storage and distribution of natural gas. For the purposes of storage, it is most efficient (from a volume standpoint) to store natural gas in its liquid state (i.e. "liquified natural gas" or "LNG"). However, the liquefaction temperature of natural gas is about -163°C. Because of this, the materials used for the storage tanks must be both ductile and crack resistant at these temperatures. Additionally, it is beneficial for the material to have high strength so as to reduce the overall wall thickness and prevent brittle fracture from occurring during the welding process.

Both 5% and 9% nickel steels have been, and are, being used for the construction of LNG storage tanks, because of the beneficial attributes of this steel for this particular application. Because of the safety concerns and requirements regarding LNG storage tanks, the welding of these materials is critical as is to be done in accordance with numerous standards. Additionally, because of the material properties of the base steel, it is preferred that AC welding be used to prevent the effects of magnetism causing arc-blow, which in turn causes weld defects. The use of AC welding is accomplished in accordance with an embodiment of the present invention, which is discussed in further detail below. Up until now only DC welding is being used in welding LNG storage detail below. Up until now only DC welding is being used in welding LNG storage tanks. Because of this only certain types of welding are effective for welding LNG storage tanks, and each of the current methods have drawbacks.

In welding LNG storage tanks submerged arc welding (SAW) has been typically used when welding in the 2G position. However, out of the 2G position SAW can not be used effectively. For out-of-position welding, shielded metal arc welding (SMAW) has been used, but SMAW requires a very high skill level and results in a high number of defects in welding, resulting in costly and time consuming re-welds. Additionally, because SMAW uses a "stick electrode" continuity in the weld can be compromised.

Additional types of welding used for LNG storage tanks is gas metal arc welding (GMAC) and gas tungsten arc welding (GTAC). However, because each of these methods use gas shielding, these options are undesirable in outdoor or hostile environments and are a costly and inefficient option.

### REFERENCES

The present invention involves using a short arc welding process employing a self-shielding cored electrode which is capable of satisfying the requirements for welding American Petroleum Institute (API) Grade X-80 line pipe, or higher, and for welding LNG storage tanks. There is a synergistic relationship when combining the welding process and the flux cored electrode of the present invention. Thus, the present invention combines controlling the energy input along with the microstructure control of the weld metal deposited to achieve high-strength and toughness. In an exemplary embodiment of the present invention, which can be used for welding LNG storage tanks, the yield strength is at least 430 MPa, the tensile strength is at least 690 MPa and the Charpy V-Notch (CVN) toughness is at least 70 Joules at -196 degrees C. In another embodiment, the tensile strength is in the range of 690 to 825 MPa.

Short-circuit arc welding systems, techniques, and associated concepts, as well as pipe welding methods and apparatuses are generally set forth in the following United States patents, the contents of which are hereby referenced as background information: Parks 4,717,807; Parks 4,954,691; Parker 5,676,857; Stava 5,742,029; Stava 5,961,863; Parker 5,981,906; Nicholson 6,093,906; Stava 6,160,241; Stava 6,172,333; Nicholson 6,204,478; Stava 6,215,100; Houston 6,472,634; and Stava 6,501,049.

The electric arc welding field uses a variety of welding processes between the end of a consumable advancing electrode and a workpiece, which workpiece may include two or more components to be welded together. An embodiment of the present invention relates to the short arc process where the advancing electrode is melted by the heat of the arc during a current pulse and then, after the molten metal forms into a ball by surface tension action, the molten metal ball is transferred to the workpiece by a short circuit action. The short circuit occurs when the advancing wire moves the ball into contact with the molten metal puddle on the workpiece, which short is sensed by a plunge in the welding voltage. Thereafter, the short circuit is broken and the short arc welding process is repeated. The present invention is an improvement in short arc welding and is performed by using a power source where the profile of the welding waveform is controlled by a waveform generator operating a pulse width modulator of a high switching speed inverter, as disclosed in several patents by assignee, such as shown in Parks 4,866,247; Blankenship 5,278,390; and, Houston 6,472,634, each of which is hereby referenced. These three patents illustrate the type of high switching speed power source employed for practicing an exemplary embodiment of the present invention and are incorporated herein as background technology. A waveform of the waveform generator is stored in memory as a state table, which table is selected and outputted to the waveform generator in accordance with standard technology pioneered by The Lincoln Electric Company of Cleveland, Ohio. Such selection of a table for creating the waveform profile in the waveform generator is disclosed in several prior art patents, such as the previously mentioned Blankenship 5,278,390. Consequently, a power source used in practicing the present invention is now commonly known and constitutes background technology used in the present invention. An aspect of the short arc welding system of the present invention employs a circuit to determine the total energy of the melting pulse forming the molten metal ball of the advancing electrode, such as described in Parks 4,866,247. The total energy of the melting pulse is sensed by a watt meter having an integrated output over the time of the melting pulse. This technology is referenced herein since it is employed in one aspect of the present invention. After a short has been created in a short arc welding system, the short is cleared by a subsequent increase in the welding current. Such procedure is well known in short arc welding systems and is described generally in Ihde 6,617,549 and in Parks 4,866,247. Consequently, the technology described in Ihde 6,617,549 is also background technology. An exemplary embodiment of the present invention is a modification of a standard AC pulse welding system known in the welding industry. A prior pending application of assignee describes standard pulse welding, both DC and AC, with an energy measurement circuit or program for a high frequency switching power source of the type used in practicing an exemplary AC short circuit implementation of the present invention. Although not necessary for understanding the present invention or practicing the present invention, this prior application, which is Serial No. 11/103,040 filed April 11, 2005, is referenced herein.

The present invention relates to a short arc welding system, and method, for controlling the melting pulse of the system for depositing a special cored electrode so no shielding gas is needed, which is capable of satisfying the requirements for welding American Petroleum Institute (API) Grade X-80 line pipe, or higher, and LNG storage tanks. The system and method maintains a desired time between the pulse and the actual short circuit. This time is controlled by a feedback loop involving a desired timing of the short circuit and the pulse, so that the size of the ball of the pulse is varied to maintain a consistent short circuit timing. This process is a substantial improvement of other short arc control arrangements, such as disclosed in Pijls 4,020,320 using two power sources. A first source maintains a constant size melting pulse and there is a fixed time between the short circuit and the subsequent clearing pulse. There is no feedback between the pulsed timing and a parameter of the melting pulse, as employed in the present invention. A desired time is maintained between the end of the melting pulse and the short circuit event. By fixing the desired time using a feedback loop concept, arc stability is improved. This invention is applicable to a DC process, as shown in Pijls 4,020,320, but is primarily advantageous when using an AC short arc welding system. Consequently, Pijls 4,020,320 is background technology showing a control circuit for a DC short arc system wherein two unrelated timings are maintained constant without a closed loop control of the melting pulse.

The present invention further involves a welding method employing a flux cored, i.e. self-shielding, electrode or welding wire. Details of arc welding electrodes or wires and specifically, cored electrodes for welding are provided in U.S. Patents 5,369,244; 5,365,036; 5,233,160; 5,225,661; 5,132,514; 5,120,931; 5,091,628; 5,055,655; 5,015,823; 5,003,155; 4,833,296; 4,723,061; 4,717,536; 4,551,610; and 4,186,293.

Also, prior applications filed September 8, 2003 as Serial No. 10/655,685; filed April 29, 2004 as Serial No. 10/834,141; filed October 6, 2004 as Serial No. 10/959,587; and filed October 31, 2005 as Serial No. 11/263,064 are each background, non-prior art technology. EP 1 779 957 A2 shows a welding method employing an AC-short arc welding process to weld the workpiece using an advancing self-shielded electrode, wherein an average arc length during said short arc welding process is up to 0,3 inches and wherein no externally supplied shielding is used during said employing step to the work piece.

### SUMMARY OF THE PRESENT INVENTION

The present invention provides a method of welding a workpiece according to claim 1, and a welding system according to claim 8, and is thus directed to a system and method for addressing the problems discussed above and providing a system and method which is capable of creating a weld which satisfies the requirements for welding American Petroleum Institute (API) Grade X-80 line pipe, or higher, and welding LNG storage tanks. In an exemplary embodiment of the present invention, which can be used for welding LNG storage tanks, the yield strength is at least 430

MPa, the tensile strength is at least 690 MPa and the Charpy V-Notch (CVN) toughness is at least 70 Joules at -196 degrees C. In another embodiment, the tensile strength is in the range of 690 to 825 MPa.

The system and method of the present invention controls the welding arc through a specialized power source to minimize the arc length coupled with the use of a cored, i.e. self-shielded, electrode to achieve the desired welding attributes. The use of the short arc minimizes the contamination from the atmosphere in the weld pool, thus improving toughness, while at the same time being more resistant to porosity during welding. Further, the use of the short arc length allows for the use of a self-shielding electrode, according to an embodiment of the present invention, which contains a composition according to an aspect of the present invention, discussed further below. Further, in a further embodiment, there is no need to use a shielding gas when welding LNG storage tanks and achieving a weld strength of at least 430 MPa yield strength, at least 690 MPa tensile strength and a Charpy V-Notch (CVN) toughness of at least 70 Joules at -196 degrees C.

When an embodiment of the present invention is used in conjunction with welding LNG storage tanks, the embodiment allows for welding in 1G, 2G and 3G, or "out-of-position" positions. In a further embodiment of the present invention, where the diameter of the electrode used is smaller than that used for the 1G or 2G positions, 3G or "out-of-position" welding can be accomplished.

In accordance with a first aspect of the present invention as it relates to the method, the melting pulse of the short arc waveform is controlled interactively by a feedback loop and not by fixing constant values of the melting pulse. The time between the end of the melting pulse and the short circuit is maintained by reactively changing parameters of the melting pulse in a short arc welding system. In one exemplary embodiment of the invention the system is an AC system, but can workpiece weld puddle. In an embodiment, this AC waveform is controlled by a waveform generator controlling the profile of the individual current segments of the waveform and determining the polarity of the waveform segments. In the prior art, a joule threshold switch was used to provide a constant energy to the melting pulse. In accordance with an embodiment of the present invention, there is a timer to measure the time for the electrode to short after the melting pulse. A feedback loop is employed to maintain a consistent time between the melting pulse and the short circuit event. This control of time stabilizes the arc and the shorting cycle. In one embodiment of the present invention, the time between the melting pulse and the short is about 1.0 ms. Depending upon the electrode size and deposition rate, the time between the melting pulse and the short circuit event may be adjusted to a fixed value in the general range of 0.5 ms to 2.0 ms. Control of the timing is typically applicable to AC short arc welding; however, the same concept is applicable to straight DC positive polarity. In both instances, the advancing wire with molten metal formed by the melting pulse is held at a low quiescent positive current facilitating the formation of a ball preparatory to the short circuit event. In either implementation of the invention, the joules or other parameter of the melting pulse is controlled by a feedback loop conditioned to maintain a preset time to the short circuit event.

The AC implementation of the first aspect of the present invention is useful for tubular electrodes of the flux cored type and one embodiment is implemented with a flux core electrode with alloy ingredients in the core according to an aspect of the present invention, discussed further below. Control of the melting cycle of a flux cored electrode based upon feedback from the short circuit time is a very precise procedure to maintain stability of the AC short circuit welding process. In view of the foregoing, an embodiment the present invention may be used to weld pipe with a cored, i.e. self-shielding, electrode according to an embodiment of the present invention. A further embodiment of the invention may be used to weld an LNG storage tank with a cored, i.e. self-shielding, electrode. The welding current for such electrode, when using a method of the present invention, is below the threshold current for spray welding. Thus, the metal transfer to the pipe/tank joint must involve some type of short circuit, and in an embodiment of the present invention will involve a globular short circuit transfer of the type to which the present invention is directed. Improving the weld stability by using AC short arc welding still may result in instability of the arc. This instability has been overcome by implementing the present invention. Thus, the present invention is particularly applicable to AC short arc welding of a pipe joint using a self-shielding cored electrode, so that the weld strength satisfies the requirements for welding American Petroleum Institute (API) Grade X-80 line pipe, or higher, and/or LNG storage tanks.

In accordance with an embodiment of the present invention, there is provided a welding system for performing a short arc welding process between an advancing wire electrode and a workpiece, where the system comprises a power source with a controller for creating a current pulse introducing energy into the electrode to melt the end of the electrode and a low current quiescent metal transfer section allowing the melted metal on the end of the electrode to be deposited into the weld puddle of the workpiece. During the low current metal transfer section, the molten metal short circuits against the molten metal puddle. A timer measures the actual time between the end of the melting pulse and the short circuit event. A device is used to set a desired time between the pulse and short circuit event and a circuit is used to create a corrective signal based upon the difference between the actual time and the desired time. This corrective signal is used to control a given parameter of the melting pulse, such as the total energy introduced into the wire during the melting pulse.

In accordance with an exemplary embodiment of the first aspect of the present invention, the short arc welding process is an AC process wherein the melting pulse is performed with a negative current and the quiescent low current metal transfer section of the waveform is at a positive polarity. The AC version of the present invention is applicable for welding with a flux cored electrode in several environments, such as the root pass of a pipe welding joint.

In accordance with another aspect of the power source of the present invention, the controller of the short arc welding system includes a circuit to create a short circuit clearing pulse after the short circuit. In this embodiment of the power source a waveform generator determines the polarity and profile of the welding waveform at any given time. The welding system of the present invention is used to maintain the time between the melting pulse and the short at a fixed value, which fixed value is in the general range 0.5-2.0 ms and, in another embodiment is approximately 1.0 ms.

In accordance with another aspect of the power source or method performed by the power source, the short arc system is performed DC positive with both the melting pulse and the quiescent section being positive and followed by a short circuit positive clearing pulse. This implementation of the present invention does not involve a polarity change from the waveform generator during the processing of the waveform to practice the short arc welding process. The short arc welding system is AC and there is a circuit to control the current pulse for causing the actual time between the melting pulse and short circuit so it is the same as the desired time. This embodiment of the present invention maintains a constant time, as does other embodiments of the present invention.

One embodiment of the present invention controls the energy of the melting pulse to control the time between the melting pulse and the ultimate short circuit event.

Yet another aspect of the first aspect of the invention is the provision of a method for controlling the melting pulse of a short arc welding process so that the process has a selected time between the melting pulse and the short circuit event. The parameter controlled by this method is the total energy of the melting pulse. This embodiment of the present invention may be used in the root pass of a circular open root pipe joint using a flux cored electrode.

A second aspect of the invention relates at least in part, to utilizing a relatively short arc length during AC welding as obtained by the described short arc method, which results in contamination of the weld from the atmosphere being significantly reduced. This embodiment of the invention also utilizes a particular flux alloy system, which when used in an electrode along with this aspect of the invention, can achieve beneficial results. The flux/alloy system of the cored electrode enables and promotes a short arc length. Combining these aspects in accordance with an embodiment of the present invention, provides a synergistic phenomenon which produces a sound and tough weld metal with strength of over 60 to 70 ksi, and in another embodiment have a yield strength of at least 80 ksi, thus providing a weld which satisfies the requirements for welding American Petroleum Institute (API) Grade X-80 line pipe, or higher. Further, an exemplary embodiment of the present invention can achieve over 550 MPa yield strength and 690 MPa tensile strength, and a Charpy V-Notch (CVN) toughness of over 60 Joules at -20 degrees C. Moreover, alloys, as used in embodiments of the present invention, allow use of thinner pipes and there is no need for shielding gas in the pipe welding area. Additionally, another embodiment of the present invention allows for the welding of LNG storage tanks using self-shielded flux cored arc welding (FCAW-S) in both the 1G and 2G positions, and in a further embodiment, 3G or "out-of position" welding without the need for shielding gas.

Waveform technology, as pioneered by The Lincoln Electric Company of Cleveland, Ohio, has been modified for use in AC welding with flux cored electrodes. Cored electrodes allow the welding operation to be more precisely controlled with the alloy of the weld bead being tailored to the desired mechanical characteristics for the bead and with the position of the welding operation being less limited. However, to provide arc stability and appropriate melting temperatures and rates, the actual control of the waveform for the AC process is quite complicated. Contamination of the weld metal during arc welding is still a problem using AC welding for cored electrodes. Contaminants, in the weld metal after the welding operation can cause porosity, cracking and other types of defects in the weld metal. Consequently, a major challenge confronting designers of arc welding processes has been to develop techniques for excluding elements, such as contaminants from the atmosphere, from the arc environment or for neutralizing the potentially harmful effects of such impurities. The potential source of contamination, includes the materials that comprise the welding electrode, impurities in the workpiece itself and ambient atmosphere. Cored electrodes may contain "killing" agents, such as aluminum, magnesium, zirconium and titanium which agents combine chemically with potential contaminates to prevent them from forming porosity and harmful inclusion in the weld metal. The present invention involves the use of an electrode composition that reduces the tendency of a cored electrode to allow inclusion of contaminants in the weld metal. The method also reduces the amount of material required as a "killing" agent.

Specifically, the present invention provides a self-shielded flux cored arc welding (FCAW-S) electrode particularly adapted for forming welds having reduced levels of contaminants using an AC waveform. The electrode has an alloy/flux system comprising from about 35 to about 55% barium fluoride, from about 2 to about 12% lithium fluoride, from about 0 to about 15% lithium oxide, from about 0 to about 15% barium oxide, from about 5 to about 20% iron oxide, and up to about 25% of a deoxidation and denitriding agent. This agent can be selected from aluminum, magnesium, titanium, zirconium, and combinations thereof.

When using an embodiment of the present invention to weld LNG storage tanks, the composition of the electrode is selected to match the base metal being welded so as to optimize weld strength and provide a minimum of 5% nickel in the weld deposit.

The present invention provides a method of arc welding using a self-shielded flux cored electrode that utilizes a particular alloy/flux system. The method comprises applying a first negative voltage between an electrode and a substrate to cause at least partial melting of the electrode proximate the substrate. The method also comprises applying a positive voltage between the electrode and the substrate to promote formation of a flowable mass of material from the electrode. The method further comprises monitoring for occurrence of an electrical short between the electrode and the substrate through the flowable mass. The method further comprises upon detecting an electrical short, applying a second negative voltage between the electrode and the substrate. And, the method comprises increasing the magnitude of the second negative voltage, to thereby clear the electrical short and form a weld on the substrate from the flowable mass. The self-shielded flux cored electrode can comprise from about 35 to about 55% barium fluoride, from about 2 to about 12% lithium fluoride, from about 2 to about 15% lithium oxide, from about 5 to about 20% iron oxide, and up to about 25% of a deoxidation and denitriding agent selected from the group consisting of aluminum, magnesium, titanium, zirconium, and combinations thereof.

An object of the present invention is the provision of a short arc welding system, which system controls the spacing of the short circuit events during the process, especially when the process is performed in the AC mode, to provide a weld which satisfies the requirements for welding at least American Petroleum Institute (API) Grade X-80 line pipe. Another object, of an embodiment of the invention, is the provision of a short arc welding system, which system controls the spacing of the short circuit events during the process, especially when the process is performed in the AC mode, to provide a weld which satisfies the requirements for welding LNG storage tanks.

Another object of the present invention is the provision of a method for short arc welding, which method controls the melting pulse based upon the time between the melting pulse and short so this time remains fixed at a desired value.

Yet another object of the present invention is the provision of an improved electrode composition, and particularly an electrode fill composition which is particularly adapted for use in combination with the novel short arc welding system and method.

A further object of the present invention is to provide a synergistic system comprising a short arc process and flux cored electrode to stabilize the arc at the shortest possible arc length. Thus, the contamination from the atmosphere is minimized. The combination of an alloy system and a weld process allows the arc to be stable at such short arc lengths and result in a sound and tough weld metal. One embodiment of the invention can provide a weld, without the use of gas-shielding, having a yield strength of at least 80 ksi, thus providing a weld which satisfies the requirements for welding American Petroleum Institute (API) Grade X-80 line pipe, or higher. Further, an exemplary embodiment of the present invention can achieve over 550 MPa yield strength and 690 MPa tensile strength, and a Charpy V-Notch (CVN) toughness of over 60 Joules at -20 degrees C. In yet a further embodiment of the invention, a weld can be obtained having a strength sufficient for the requirements of welding LNG storage tanks. In such an embodiment, the yield strength is at least 430 MPa, the tensile strength is at least 690 MPa and the Charpy V-Notch (CVN) toughness is at least 70 Joules at -196 degrees C. In another embodiment, the tensile strength is in the range of 690 to 825 MPa.

These and other objects and advantages will become apparent from the following description taken together with the accompanying drawings. and a weld process allows the arc to be stable at such short arc lengths and result in a sound and tough weld metal. One embodiment of the invention can provide a weld, without the use of gas-shielding, having a yield strength of at least 80 ksi, thus providing a weld which satisfies the requirements for welding American Petroleum Institute (API) Grade X-80 line pipe, or higher. In yet a further embodiment of the invention, a weld can be obtained having a strength sufficient for the requirements of welding LNG storage tanks. In such an embodiment, the yield strength is at least 430 MPa, the tensile strength is at least 690 MPa and the Charpy V-Notch (CVN) toughness is at least 70 Joules at -196 degrees C. In another embodiment, the tensile strength is in the range of 690 to 825 MPa.

These and other objects and advantages will become apparent from the following description taken together with the accompanying drawings.

### BRIEF DESCRIPTION OF DRAWINGS

The advantages, nature and various additional features of the invention will appear more fully upon consideration of the illustrative embodiment of the invention which is schematically set forth in the figures, in which:
FIGURE 1 is a block diagram of a short arc welding system used in an exemplary embodiment of the present invention;
FIGURE 1A is an enlarged cross-sectional view taken generally along line 1A-1A of FIGURE 1;
FIGURE 2 is a series of side elevational views showing the stages I-IV in a short arc welding process;
FIGURE 13 is an enlarged, schematic view representing a cored electrode where the sheath and core are melted at different rates;
FIGURE 14 is a view similar to FIGURE 13 illustrating a disadvantage of a failure to employ a tailored waveform for welding with cored electrodes;

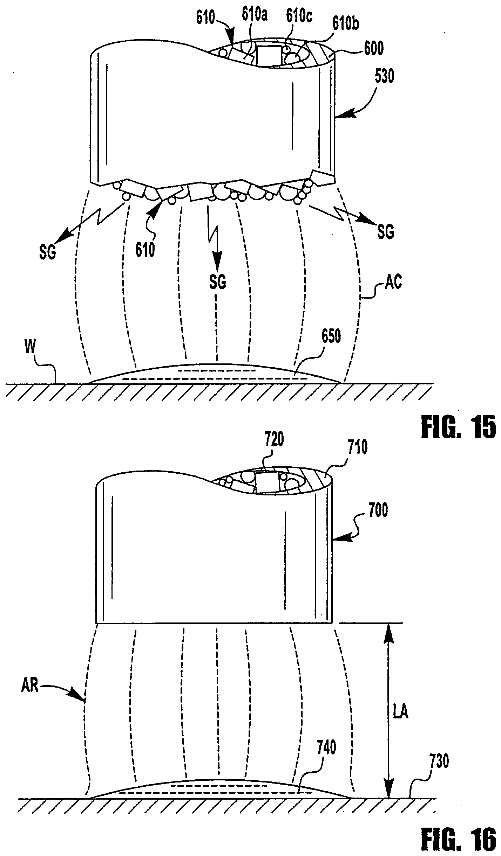

FIGURE 15 is a view similar to FIGURES 13 and 14;
FIGURE 16 is a partial, side elevational view illustrating a cored electrode in accordance with an embodiment of the present invention and showing the arc length, which length is minimized by use of the present invention;

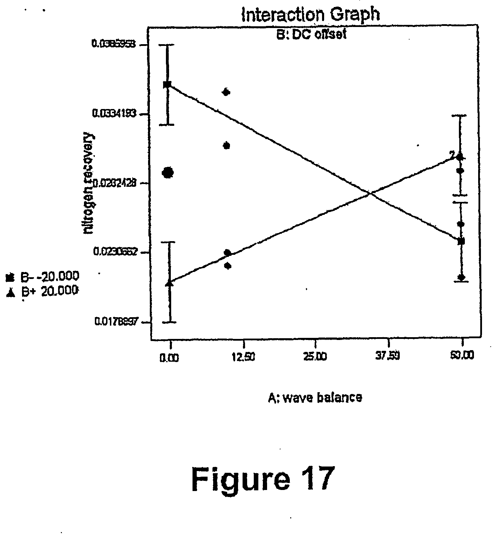

FIGURE 17 shows the influence of wave balance and DC offset on weld metal nitrogen recovery in an example of the present invention;
FIGURE 18 depicts the joint design of an example weld performed in accordance with an exemplary embodiment of the present invention; and
FIGURES 19A and 19B depict welding at the 1G and 2G positions, respectively.

### EXEMPLARY EMBODIMENTS OF THE INVENTION

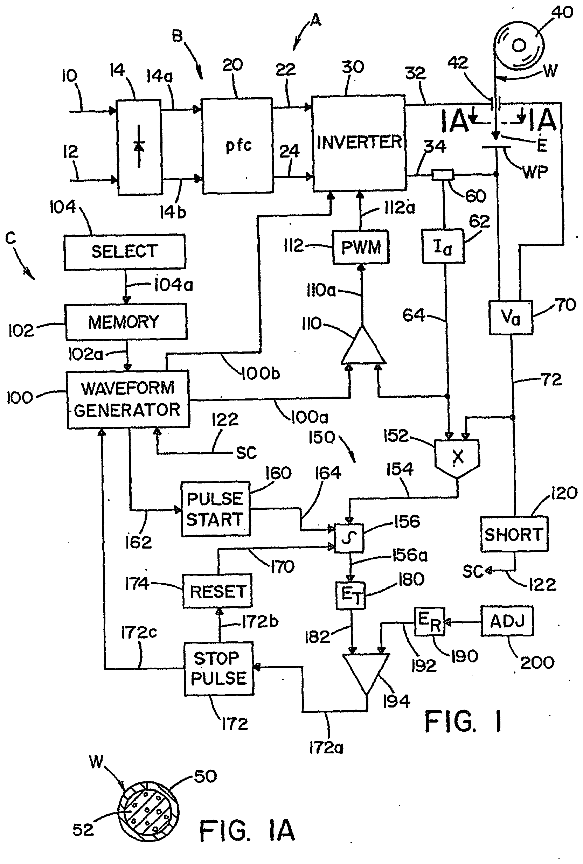

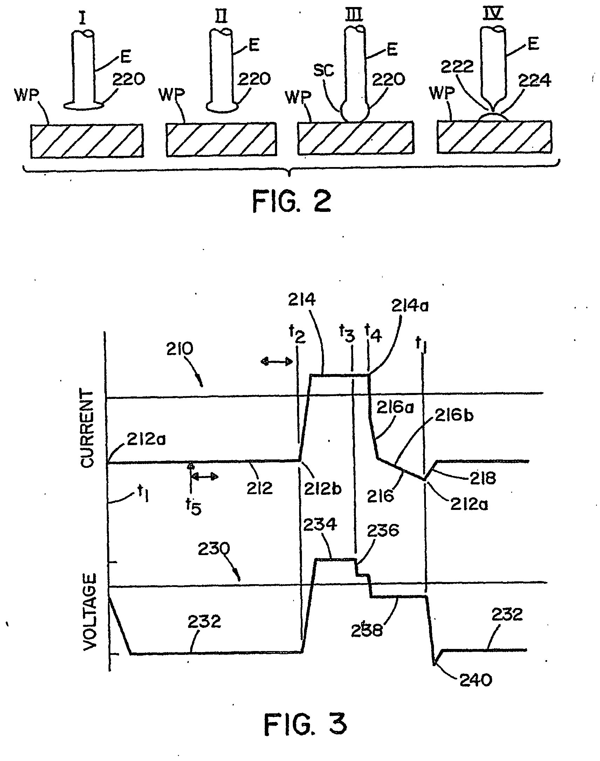

In the electric arc welding industry, short arc welding is a common practice and involves the four stages I, II, III and IV as schematically disclosed in FIGURE 2. The power source for performing short arc welding can be a transformer based power source; however, in accordance with an exemplary embodiment of the present invention, system A, shown in FIGURE 1, utilizes a high switching speed inverter based power source B having an AC supply across lines 10, 14, or a three phase supply, directed to inverter 14 creating a first DC signal across lines 14a, 14b. In accordance with standard architecture, boost or buck converter 20 is used in power source B for correcting the input power factor by creating a controlled second DC signal across output lines 22, 24. High switching speed inverter 30 converts the second DC signal across lines 22, 24 to a waveform created by a large number of current pulses across output leads 32, 34. In accordance with an exemplary embodiment of the present invention, the waveform across leads 32, 34 is either DC positive or AC; therefore, inverter 30 has an output stage, not shown, that dictates the polarity of the profiled waveform across leads 32, 34. These leads are connected to electrode E and workpiece WP, respectively. In accordance with standard short arc technology, electrode E is an advancing end of wire W supplied through contact tip 42 from supply spool or drum 40. Thus, wire W is driven toward workpiece WP at a given WFS as a controlled waveform having the desired polarity is created across the gap between electrode E and workpiece WP. In an embodiment of the invention, the wire W is a flux cored wire schematically illustrated in FIGURE 1A and shown to include an outer low carbon steel sheath 50 surrounding an internal flux core 52 having a fluxing agent and normally including alloying particles, also known as a self-shielded wire or electrode. An embodiment of the electrode will be discussed in more detail below.

Shunt 60 drives feedback current device 62 so the voltage signal on line 64 is representative of the instantaneous arc current of the welding process. In a like manner, device 70 creates a signal on output line 72 representative of the instantaneous voltage of the welding process. Controller C of inverter 30 is a digital device, such as a DSP or microprocessor, that performs functions schematically illustrated in generally analog architecture. As a central component of controller C a waveform generator 100 processes a specific waveform from a state table stored in memory unit 102 and selected according to the desired welding process by device or circuit 104. Upon selecting the desired short arc welding process a select signal 104a is directed to memory unit 102 so that the state table defining the attributes and parameters of the desired short arc welding waveform is loaded into waveform generator 100 as indicated by line 102a. Generator 100 outputs the profile of the waveform at any given time on output line 100a with the desired polarity indicated by the logic on line 100b. Illustrated power source B controlled by digital controller C is of the current control feedback type wherein the current representative voltage on line 64 is combined with the waveform profile signal on line 100a by error amplifier 110 having an output signal on line 110a to control pulse width modulator 112 in accordance with standard waveform control technology. The output signal on line 112a controls the shape of the waveform across lines 32, 34 and the polarity of the particular waveform profile being implemented is set by the logic on line 100b. In this manner, waveform generator 100 controls pulse width modulator 112 to have pulses in line 112a controlling the high frequency operation of inverter 30. This inverter switching frequency is generally greater than 18 kHz and preferably greater than about 40 kHz. As so far described, power source B with controller C operates in accordance with standard technology pioneered by The Lincoln Electric Company of Cleveland, Ohio. Controller C is digital, but illustrated in analog format. To implement a short arc welding process, it is necessary for controller C to receive feedback information regarding a short circuit condition between electrode E and workpiece WP. This feature of controller C is schematically illustrated as a short circuit detector 120 that creates a logic on line 122 to announce the existence of a short circuit event SC to waveform generator 100. Thus, the generator is informed when there is a short circuit and implements a waveform in accordance with processing a short circuit as accomplished in any short arc welding process. As so far described, controller C is standard technology, with the exception of controlling a polarity switch at the output of inverter 30 by the logic on line 100b.

To practice the invention, controller C is provided with a circuit 150 for controlling the melting pulse preparatory to the short circuit. Circuit 150 is digital, but schematically illustrated in analog architecture. The functions are implemented by the digital processor of controller C to control the energy of the melting pulse. Such energy control circuitry is described in prior copending application Serial No. 11/103,040 filed by applicant on April 11, 2005. This prior application is incorporated by reference herein not as prior art, but as related technology. As shown in the prior application, the energy of the melting pulse of a pulsed welding waveform can be controlled by circuit 150 including multiplier 152 for multiplying the instantaneous signal on lines 64, 72 to provide a signal on line 154 representing the instantaneous watts of the welding process. The wattage signal or line 154 is accumulated by a standard integrator 156 as described in Parks 4,866,247. Integration of the watt signal on line 154 is controlled by waveform generator 100 that creates a pulse start command shown as block 160 to correspond to the start of the melting pulse indicated by logic on line 162. The starting point is the time t₁ when the melting pulse is started by waveform generator 100. Output signal on line 164 starts integration of the watt signal on line 154 by integrator 156. The integration process is stopped by a logic on line 170 produced by activation of stop pulse device or circuit 172 upon receipt of logic on input line 172a. Logic on line 172a toggles device 172 to change the logic in output lines 172a and 172c. The logic on line 172c informs the waveform generator that the melting pulse is to stop to change the profile on output line 100a. At the same time, the signal on line 172b toggles reset device or circuit 174 to change the logic on line 170 to stop integration of the instantaneous watt signal. The digital number on output line 156a is loaded into digital register 180 having an output 182 representing the total energy of a given melting pulse in the short art welding process. This total energy signal is compared with a desired energy level stored in register 190 to provide a digital number or signal on line 192. Comparator 194 compares the actual energy for a given pulse represented by a number on line 182 with a desired energy level indicated by the number on line 192. The relationship between the actual energy and the desired energy controls the logic on line 172a. When the signal from line 182 equals the signal on line 192, comparator 194 changes the logic on line 172a to stop the pulse as indicated by device or circuit 172. This stops integration and stops the melting pulse being created by waveform generator 100. Circuit 150 is employed for performing an exemplary embodiment of the present invention which changes the reference or desired energy for the melting pulse by changing the number on line 192 through adjustment of circuit 200. The pulse is stopped when the adjusted energy or energy threshold is reached as determined by the number signal on line 182 as compared to the signal on line 192. In an embodiment of the present invention, the power source and method used adjusts circuit 200 to change the reference energy for performing a short arc welding process by changing the melting pulse.

Short arc welding system A using power source B with digital controller C is operated by adjusting circuit 200 to perform the waveform shown in FIGURE 3. AC current waveform 200 has a negative melting pulse 212 represented by stage I in FIGURE 2 where the melting pulse produces molten metal 220 on the end of electrode E. The level of current in pulse 212 is below current needed for spray arc so there is a transfer by a short. The time t₁ starts the Joule measurement, as explained later. The pulse has a start position 212a at time t₁ and a stop position 212b at time t₂. Following the melting pulse, in accordance with standard practice, there is a positive low current quiescent transfer section 214, as represented by stage II of FIGURE 2. In this stage, the molten metal 220 on the end of advancing electrode E is formed into a ball by surface tension action awaiting a short circuit which occurs at time t₃ and is shown as stage III. Consequently, the time between t₂ and t₃ is the time between the end of the melting pulse and the short circuit event, which time is indicated by the logic on line 122 as shown in FIGURE 1. After stage II, a current pinch action shown as neck 222 separates the molten metal 220 from puddle 224. This electrical pinching action shown in stage IV is accelerated in accordance with standard practice by a negative short circuit pulse 216 having a first current section 216a with a steep slope and followed by a second current section 216b with a more gradual slope. Ultimately, the shorted metal separates and the SC logic on line 122 shifts to start the next current pulse at time t₁ indicated by a transition section 218. Waveform 210 is an AC waveform having a negative melting pulse 212, a low current quiescent section 214 and a clearance pulse 216 transitioning into the next negative pulse 212 at time t₁. The corresponding voltage has a waveform 230 with negative section 232, a low level positive section 234 that plunges at short 236 and is followed by a negative voltage section 238 that transitions at section 240 into the next melting pulse voltage 232. The total cycle time is from t₁ to the next t₁ and the positive transfer 214 has a time less than 20% of the total cycle time. This prevents stubbing.

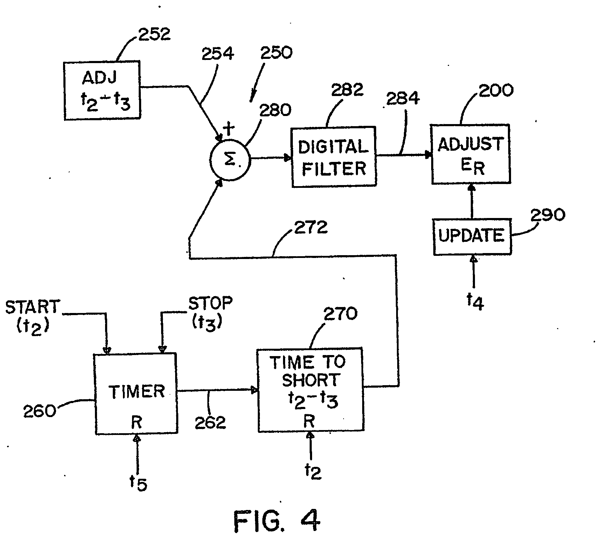

The present invention involves a power source and method for controlling waveform 210 by waveform generator 100 of controller C so the time between the end of melting pulse 212 at t₂ and the time of the actual short event t₃ is constant based upon adjustment of circuit 200. This time delay adjustment, in an exemplary embodiment, is accomplished by the circuit 250 shown in FIGURE 4. In this circuit, the time between the melting pulse and at time t₂ and the short circuit at time t₃ is set to a desired level between 0.5 to 2.0 ms. In one embodiment, the set desired time delay is 1.0 ms, which is the level of the signal on line 254. Thus, the numerical number on line 254 is the desired time t₂ to t₃. The actual time between t₂ and t₃ is determined by timer 260 which is started at time t₂ and stopped at time t₃. The timer is reset for the next measurement by an appropriate time indicated as t₅ which can be adjusted to be located at various positions after t₃, which position is illustrated to be during the melting pulse in FIGURE 3. The number on line 262 is the actual time between t₂ and t₃. This actual time is stored in register 270 which is reset at any appropriate time such as time t₂. Thus, the digital data on line 272 is the actual measured time between t₂ and t₃. This time is compared to the desired time on line 254. Any error amplifier can be used to digitally process the relationship of actual time to the set time. The process is schematically illustrated as a summing junction 280 and digital filter 282 having an output 284 for adjusting circuit 200. The difference between the desired time and the actual time is an error signal in line 284 which increases or decreases the desired total energy of circuit 200. The desired total energy is periodically updated at an appropriate time indicated as t₂ by an update circuit 290. Thus, at all times the signal in line 192 of FIGURE 1 is the desired total energy for pulse 212 of the short arc process. This total energy is adjusted by any difference between time t₂ and time t₃ so the energy of pulse 212 maintains a constant or desired time delay for the upcoming short circuit. This time control stabilizes the short arc welding process of system A.

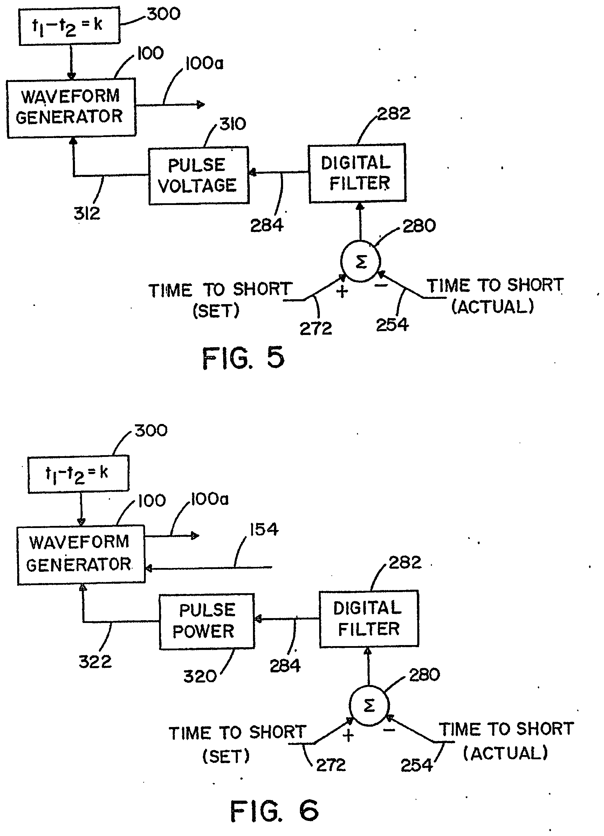

In FIGURE 4, an exemplary embodiment of the power source is implemented by changing the energy threshold for the melting pulse to change the timing between the pulse and the short event. This time can also be changed by voltage or power of the melting pulse as schematically illustrated in FIGURES 5 and 6. In both of these embodiments, the time of the melting pulse t₁ to t₂ is maintained fixed as indicated by block 300. During this constant time melting pulse, the voltage or power is changed to control the time between the pulse and the short circuit event. In FIGURE 5, the number on output line 284 from filter 282 controls feedback loop 310 to adjust the voltage of the melting pulse, as indicated by the numerical data on line 312. To adjust the power for controlling the delay time of the short circuit event, the number on output line 284 is used to adjust feedback loop 320, which is compared to the instantaneous power on line 154 by waveform generator 100. The change in power is a numerical value on line 322 which is compared to the digital number on line 154 for controlling the power of the melting pulse. Thus, in embodiments of the present invention, the total energy of the waveform, the voltage of the waveform or the power of the waveform is adjusted to maintain a constant time between t₂ to t₃ to stabilize the arc and control the short circuit events of system A shown in FIGURE 1.

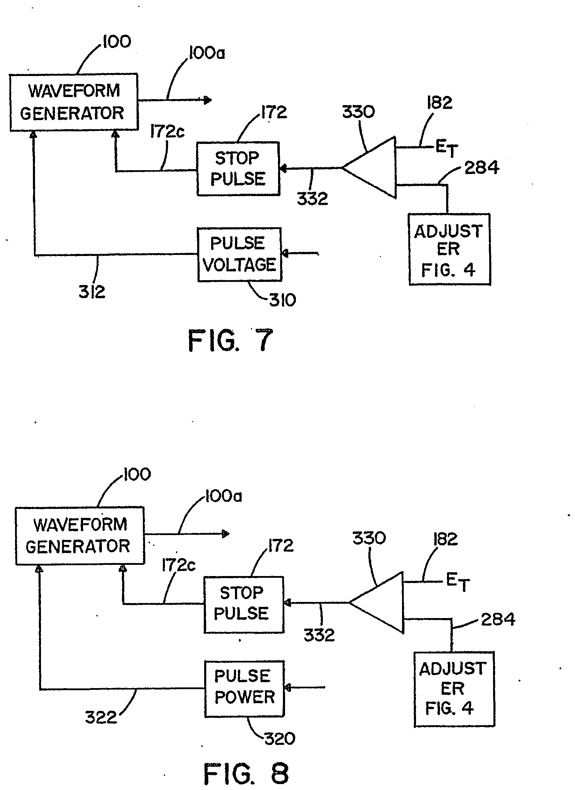

In accordance with another embodiment of the power source, the energy adjustment of melting pulse 212 is combined with the two modifications of the present invention illustrated in FIGURES 5 and 6. Such combination controls are shown in FIGURES 7 and 8 wherein prior summing junction 280 and digital filter 282 are illustrated as combined in analog error amplifier 330. The component or program has output 332 with a logic for stopping the melting pulse when the threshold energy has been reached, as indicated by the logic on line 182. Thus, the total energy of the pulse is controlled together with the pulse voltage control circuit 310 in FIGURE 7 and the pulse power control 320 as shown in FIGURE 8. Output 312 is combined with output 172c for controlling the waveform profile in line 100a of generator 100. In a like manner, the energy level is controlled by logic on line 172c in combination with the digital information on output line 322 of power pulse control circuit 320. Other combinations of parameters can be used to control melting pulse 212 to assure an accurate control of the time between the melting pulse and the short circuit event. Such other parameters are within the skill of the art in controlling a waveform generator by closed feedback loops.

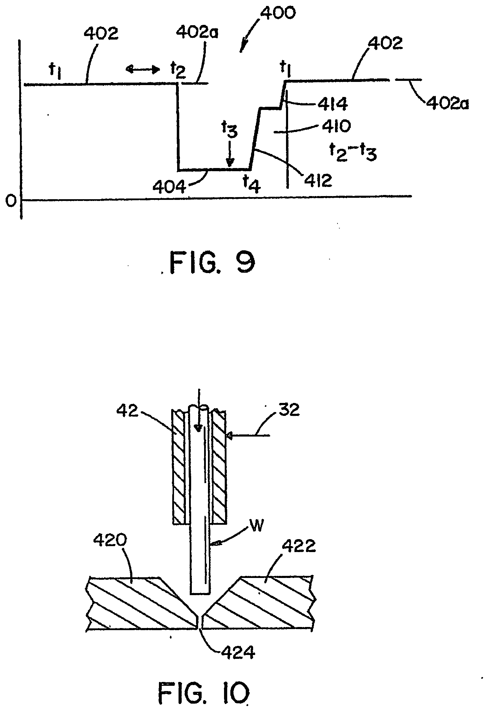

In an exemplary embodiment of the present invention, the process is an AC process, as shown in FIGURE 4; however, DC positive waveform 400 can be used as shown in FIGURE 9. Melting pulse 402 has a high positive current 402a until the pulse is terminated at time t₂. The current, in the DC positive mode, is limited to a level below that needed for spray arc so the metal is not detached without shorting. This concept defines the short arc welding process. Then the waveform transitions into a low level positive current section 404 awaiting the short at time t₃. This low level positive current is used in an exemplary embodiment of the present invention and terminates at time t₃. Thereafter, short clearing pulse 410 is created by the waveform generator. Pulse 410 has high ramp area 412 and a stepped area 414 to bring the current back up to the high current level 402a. Various illustrated embodiments of the present invention can be used in implementing the positive current waveform 400; however, the logic on line 100b for controlling the polarity of the output waveform on lines 32, 34 is not necessary.

An exemplary embodiment of the power source is in pipe welding operation using a flux cored electrode as schematically represented in FIGURE 1A. Such pipe welding operation is schematically illustrated in FIGURE 10 wherein pipe sections 420, 422 define an open root 424. The present invention as shown in FIGURE 4 controls the waveform on wire W as it moves through contact tip 42 to open root 424 of the pipe joint. FIGURE 10 shows a particular embodiment using the present invention for welding the root pass of a pipe joint to tack the pipe sections together for subsequent joining with standard welding techniques.

In certain embodiments, the power sources and/or welding operations according to the present invention exhibit one or more of the following aspects. The current density is generally less than that required for spray welding since the primary mode of metal transfer is short circuit welding. As in many short circuit processes, a pinch current is established depending upon the wire diameter, for example for a 5/64 inch flux cored wire, a current of 625 amps can be used. Generally, the positive current tends to set the arc length. If the positive current is allowed to reach the same level as the negative current arc length, even for half a millisecond, the positive current arc will reach a non-desirable length. Generally, positive side control current is in the range of from about 50 amps to about 125 amps, and in one embodiment is about 75 amps. The negative portion of the wave shape can either be a constant power or voltage with a slope of from about 5 to 15 percent current. Typically, welding can be performed at about 60 hertz, 10 percent positive. Since the positive current is set at a relatively low level, the portion that the wave shape is positive is typically less than 20 percent.

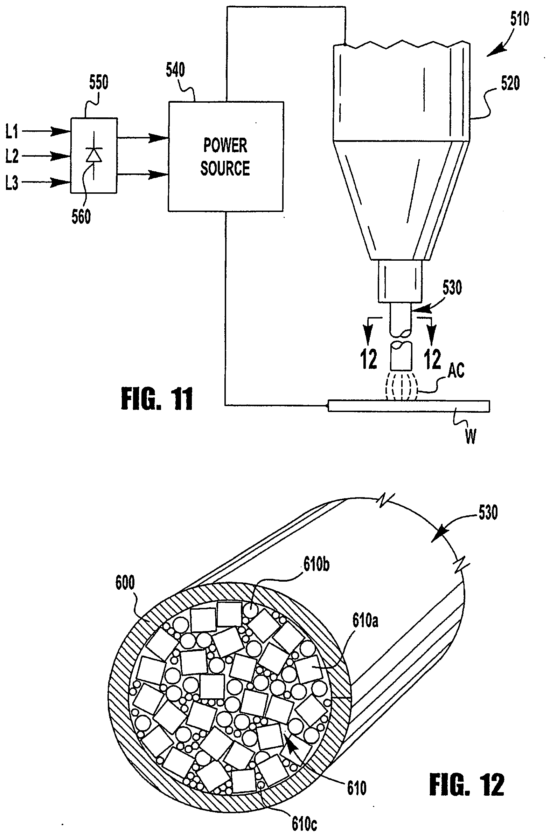

FIGURES 11 and 12 schematically illustrate a waveform technology welder and/or welding system 510, and a cored electrode 530. The welding system comprises a welder 510 having a torch 520 for directing an electrode 530 toward workpiece W. The welding system 510 includes a three phase input power supply L1, L2, and L3, which is rectified through rectifier 550, 560, and a power source 540. The power source 540 provides an output, and specifically, an AC waveform as described in U.S. application Serial No. 11/263,064, filed October 31, 2005, previously incorporated by reference. An arc AC is created between the end of electrode 530 and workpiece W. The electrode is a cored electrode with a sheath 600 and an internal filled core 610. The core includes flux ingredients, such as represented by particles 610a. The purpose of these ingredients 610a is to (a) shield the molten weld metal from atmospheric contamination by covering the molten metal with slag, (b) combine chemically with any atmospheric contaminants such that their negative impact on the weld quality is minimized and/or (c) generate arc shielding gases. In accordance with standard practice, core 610 also includes alloying ingredients, referred to as particles 610b, together with other miscellaneous particles 610c that are combined to provide the fill of core 610. In prior applications, to optimize the welding operation, it has been necessary to use solid wire with an external shielding

An exemplary embodiment of the power source is in pipe welding operation using a flux cored electrode as schematically represented in FIGURE 1A. Such pipe welding operation is schematically illustrated in FIGURE 10 wherein pipe sections 420, 422 define an open root 424. The present invention as shown in FIGURE 4 controls the waveform on wire W as it moves through contact tip 42 to open root 424 of the pipe joint. FIGURE 10 shows a particular embodiment using the present invention for welding the root pass of a pipe joint to tack the pipe sections together for subsequent joining with standard welding techniques.

In certain embodiments, the power sources and/or welding operations according to the present invention exhibit one or more of the following aspects. The current density is generally less than that required for spray welding since the primary mode of metal transfer is short circuit welding. As in many short circuit processes, a pinch current is established depending upon the wire diameter, for example for a 5/64 inch (0.2 cm) flux cored wire, a current of 625 amps can be used. Generally, the positive current tends to set the arc length. If the positive current is allowed to reach the same level as the negative current arc length, even for half a millisecond, the positive current arc will reach a non-desirable length. Generally, positive side control current is in the range of from about 50 amps to about 125 amps, and in one embodiment is about 75 amps. The negative portion of the wave shape can either be a constant power or voltage with a slope of from about 5 to 15 percent current. Typically, welding can be performed at about 60 hertz, 10 percent positive. Since the positive current is set at a relatively low level, the portion that the wave shape is positive is typically less than 20 percent.

FIGURES 11 and 12 schematically illustrate a waveform technology welder and/or welding system 510, and a cored electrode 530. The welding system comprises a welder 510 having a torch 520 for directing an electrode 530 toward workpiece W. The welding system 510 includes a three phase input power supply L1, L2, and L3, which is rectified through rectifier 550, 560, and a power source 540. The power source 540 provides an output, and specifically, an AC waveform as described in U.S. application Serial No. 11/263,064, filed October 31, 2005, previously referenced. An arc AC is created between the end of electrode 530 and workpiece W. The electrode is a cored electrode with a sheath 600 and an internal filled core 610. The core includes flux ingredients, such as represented by particles 610a. The purpose of these ingredients 610a is to (a) shield the molten weld metal from atmospheric contamination by covering the molten metal with- slag, (b) combine chemically with any atmospheric contaminants such that their negative impact on the weld quality is minimized and/or (c) generate arc shielding gases. In accordance with standard practice, core 610 also includes alloying ingredients, referred to as particles 610b, together with other miscellaneous particles 610c that are combined to provide the fill of core 610. In prior applications, to optimize the welding operation, it has been necessary to use solid wire with an external shielding gas. However, in order to produce a weld with specific mechanical and metallurgical properties, specific alloys are required, which can be difficult to obtain in the form of a solid wire. Further, gas shielding is not always a feasible alternative due to access to gas or difficulty to achieve adequate shielding due to windy conditions, accessibility to clean gas mixtures and difficult terrains. It is, therefore, advantageous to use a self shielding cored electrode, so that the environment does not affect the welding, as in the present invention.

Additionally, as discussed previously, a similar problem is encountered when using gas shielding in welding LNG storage tanks. Moreover, with regard to LNG storage tanks the remaining existing methods are limited in their application (i.e. SAW), or make it difficult to obtain consistent and defect free welds (i.e. SMAW).

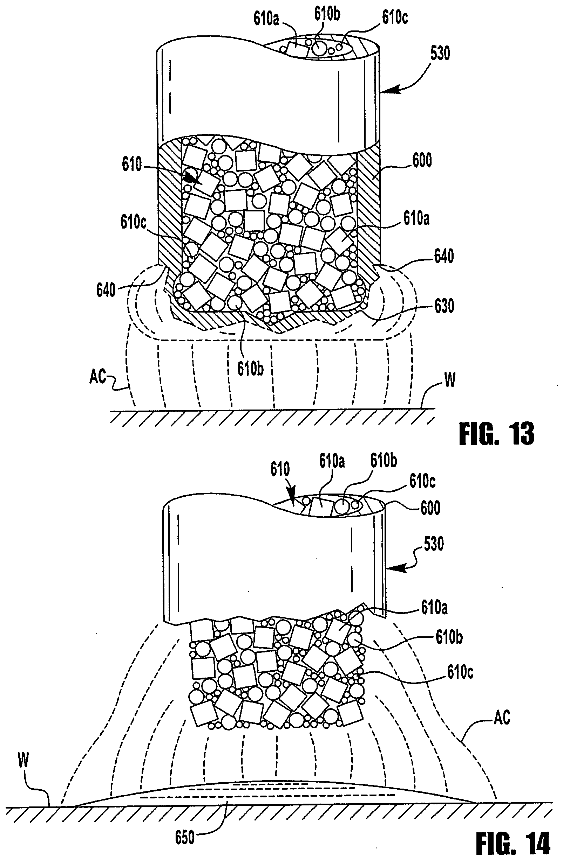

A common problem caused when using cored electrodes without control of the welding waveform profile is illustrated in FIGURE 13. The welding process melts sheath 600 to provide a portion of molten metal 630 melted upwardly around the electrode, as indicated by melted upper end 640. Thus, the sheath of the electrode is melted more rapidly than the core. This causes a molten metal material to exist at the output end of electrode 530 without protective gas or chemical reaction created by melting of the internal constituents of core 610. Thus, arc AC melts the metal of electrode 610 in an unprotected atmosphere. The necessary shielding for the molten metal is formed core 720 formed of particulate material, including alloying metals and slag or flux materials. By having internal flux or slag materials, there is no need for external shielding gas during the welding operation. By including alloying material in core 720, the puddle of weld metal 740 on workpiece 730 can be modified to have exact alloy constituents. This is an advantage and reason for using cored electrodes, instead of solid welding wire where alloying must be accomplished by the actual constituent of the welding wire. Adjustment of alloying for the weld metal is quite difficult when using solid welding wire. Therefore, it is advantageous in high quality welding to employ a cored, i.e. self-shielded electrode. Arc AR melts sheath 710 and melts constituents or fill in core 720 at a rate which can be controlled to be essentially the same. Contamination in weld metal 740, such as hydrogen, nitrogen and oxygen can cause porosity problems, cracking and other types of physical defects in the weld metal. Thus, it is a challenge to design the welding process to exclude contaminates from the molten weld metal. It is common to use "killing" agents, typically silicon, aluminum, titanium and/or zirconium which will combine chemically with potential contaminates to prevent them from forming porosity or harmful inclusions in the weld metal. Furthermore, "scavengers" may also be added to react with hydrogen containing a species in order to remove hydrogen from the weld. In order to deposit consistently sound weld metal 740, it has often been necessary to add such killing agents in quantities that are themselves detrimental to properties of the weld metal, such as ductility and low temperature toughness. Thus, it is desirable to reduce the exposure of the molten metal in arc AR to prevent contamination of the metal passing from electrode 700 to workpiece 730 so the killing agents can be minimized.

The electrode compositions, of the present invention, when used in AC welding, produce desirable welds that are durable, tough, and which are not susceptible to problems otherwise associated with the use of conventional electrode compositions. The electrode compositions of the present invention may be used in conjunction with AC waveforms where the positive and negative shapes of the AC waveform are modified to reduce the overall arc length LA. In this manner, there is less exposure to the atmosphere and less time during which the metal is molten. A detailed description of the AC waveforms and related welding processes, for which the present invention electrode compositions are designed, is set forth in U.S. application Serial No., 11/263,064, filed October 31, 2005, previously incorporated by reference. Indeed, by reducing the arc length, the temperature of the molten metal can be reduced as it travels from the electrode 700 to weld metal puddle 740. Typically, when using a welder that can perform an AC welding process with different shapes for the negative and positive sections, AC welding with cored electrodes can be used effectively in the field. Parameters of the positive and negative portions of the alternating waveform can be independently adjusted to compensate for and optimize the melting of both sheath 710 and cored 720 for selected electrode 700.

More specifically, an embodiment of the present invention involves the combination of an electrode and an AC welding wherein the positive and negative sections of the waveform are individually adjusted to accomplish the objective of a low arc length and reduce contamination. Using this strategy, the electrode composition of the present invention, particularly because it is self-shielding, can provide significant advantages. The electrodes are used without shielding gas and depending upon the particular application, can rely on deoxidizing and denitriding agents in the core for additional protection from atmospheric contamination.

Thus, an embodiment of the present invention provides a synergistic system of a welding method with a unique set of alloying and flux components in the core of a FCAW-S electrode. As noted, a cored electrode is a continuously fed tubular metal sheath with a core of powdered flux and/or alloying ingredients. These may include fluxing elements, deoxidizing and denitriding agents, and alloying materials, as well as elements that increase toughness and strength, improve corrosion resistance, and stabilize the arc. Typical core materials may include aluminum, calcium, carbon, chromium, iron, manganese, and other elements and materials. While flux cored electrodes are more widely used, metal-cored products are useful for adjusting the filler metal composition when welding alloy steels. The powders in metal-cored electrodes generally are metal and alloy powders, rather than compounds, producing only small islands of slag on the face of the weld. By contrast, flux cored electrodes produce an extensive slag cover during welding, which supports and shapes the bead. a species in order to remove hydrogen from the weld. In order to deposit consistently sound weld metal 740, it has often been necessary to add such killing agents in quantities that are themselves detrimental to properties of the weld metal, such as ductility and low temperature toughness. Thus, it is desirable to reduce the exposure of the molten metal in arc AR to prevent contamination of the metal passing from electrode 700 to workpiece 730 so the killing agents can be minimized.

The electrode compositions, of the present invention, when used in AC welding, produce desirable welds that are durable, tough, and which are not susceptible to problems otherwise associated with the use of conventional electrode compositions. The electrode compositions of the present invention may be used in conjunction with AC waveforms where the positive and negative shapes of the AC waveform are modified to reduce the overall arc length LA. In this manner, there is less exposure to the atmosphere and less time during which the metal is molten. A detailed description of the AC waveforms and related welding processes, for which the present invention electrode compositions are designed, is set forth in U.S. application Serial No., 11/263,064, filed October 31, 2005, previously referenced. Indeed, by reducing the arc length, the temperature of the molten metal can be reduced as it travels from the electrode 700 to weld metal puddle 740. Typically, when using a welder that can perform an AC welding process with different shapes for the negative and positive sections, AC welding with cored electrodes can be used effectively in the field. Parameters of the positive and negative portions of the alternating waveform can be independently adjusted to compensate for and optimize the melting of both sheath 710 and cored 720 for selected electrode 700.

More specifically, an embodiment of the present invention involves the combination of an electrode and an AC welding wherein the positive and negative sections of the waveform are individually adjusted to accomplish the objective of a low arc length and reduce contamination. Using this strategy, the electrode composition of the present invention, particularly because it is self-shielding, can provide significant advantages. The electrodes are used without shielding gas and from about 0 to about 8% barium carbonate. In yet another embodiment, the electrode fill composition may additionally include from about 0 to about 8% lithium carbonate. In yet another embodiment, the fill composition can include from about 0 to about 5% calcium oxide. In yet a further embodiment, the electrode fill composition can include from about 0 to about 5% silicon oxide. And, in another embodiment, the electrode fill composition can comprise from about 0 to about 5% manganese oxide. Other embodiments include the use of one or more of these agents, i.e. the barium carbonate, lithium carbonate, calcium oxide, silicon oxide, manganese oxide, and combinations thereof.

When using an embodiment of the present invention to weld LNG storage tanks, the composition of the electrode is selected to match the base metal being welded so as to optimize weld strength and provide a minimum of 5% nickel in the weld deposit.

An exemplary embodiment of the method, of the present invention, comprises applying a first negative voltage between an electrode and a substrate to cause at least partial melting of the electrode near the substrate. The method also comprises applying a positive voltage between the electrode and the substrate to promote formation of a flowable mass of material from the electrode. The method further comprises monitoring for occurrence of an electrical short between the electrode and the substrate through the flowable mass. The method further comprises upon detecting an electrical short, applying a second negative voltage between the electrode and the substrate. And, the method comprises increasing the magnitude of the second negative voltage, to thereby clear the electrical short and form a weld on the substrate from the flowable mass.

The composition of the electrode fill in a flux cored electrode comprises from about 35 to about 55% barium fluoride, from about 2 to about 12% lithium fluoride, from about 0 to about 15% lithium oxide, from about 0 to about 15% barium oxide, from about 5 to about 20% iron oxide, and up to about 25% of a deoxidation and denitriding agent selected from the group consisting of aluminum, magnesium, titanium, zirconium, and combinations thereof. In other embodiments, additional agents can be incorporated in the electrode fill. For instance, from about 0 to about 8% barium carbonate can be included. Another embodiment of the electrode fill composition includes from about 0 to about 8% lithium carbonate. Yet another embodiment includes from about 0 to about 5% calcium oxide. Another embodiment includes from about 0 to about 5% silicon oxide. And, yet another embodiment includes from about 0 to about 5% manganese oxide. In yet a further embodiment, one or more of these agents can be added or otherwise included in the electrode fill composition. For example, the electrode fill can also comprise, in addition to the previously noted proportions of barium fluoride, lithium fluoride, lithium oxide, barium oxide, iron oxide, and one or more particular deoxidation and denitriding agents from about 0 to about 8% barium carbonate, from about 0 to about 8% lithium carbonate, from about 0 to about 5% calcium oxide, from about 0 to about 5% silicon oxide, and from about 0 to about 5% manganese oxide.

The flux/alloy system is modified from traditional flux/alloy systems used for FCAW-S electrodes to achieve the short arc length and to weld at low heat inputs that result from the unique waveforms used in this process. The short arc length and the stable arc is a result of the combination of the alloy and flux system and the unique characteristics of the waveform. In essence, both the welding consumable and the process are optimized in tandem to achieve the final weld product requirements.

In certain embodiments, the present invention provides methods of forming weld metals having attractive properties. Generally, these methods involve providing a welding wire or electrode having a core with the previously described composition. In an embodiment, the welding wire or electrode is used free of shielding gas, or rather agents that form such a gas. The methods also include an operation in which the wire or electrode is moved toward the region of interest, such as a joint formed between two sections of pipe. In an additional embodiment, such movement is made at a controlled feed speed. The method also includes creating a welding current to melt the wire or electrode by an arc between the wire and the pipe sections to thereby form a molten metal bead in the joint. The method also includes transferring the melted wire to the molten metal bead by a succession of short circuit events. The method is particularly well suited for application to welding of a joint between two sections of pipe formed from a metal having a yield strength of at least about 70 ksi and a thickness less than about 0.75 inches. In a further embodiment, the invention can provide a weld, without the use of gas-shielding, having a yield strength of at least 80 ksi, thus providing a weld which satisfies the requirements for welding at least American Petroleum Institute (API) Grade X-80 line pipe. Further, an exemplary embodiment of the present invention can achieve over 550 MPa yield strength and 690 MPa tensile strength, and a Charpy V-Notch (CVN) toughness of over 60 Joules at -20 degrees C. In yet a further exemplary embodiment, the present invention can provide sufficient strength and weld quality so that the described FCAW-S methodology may be used for welding LNG storage tanks.

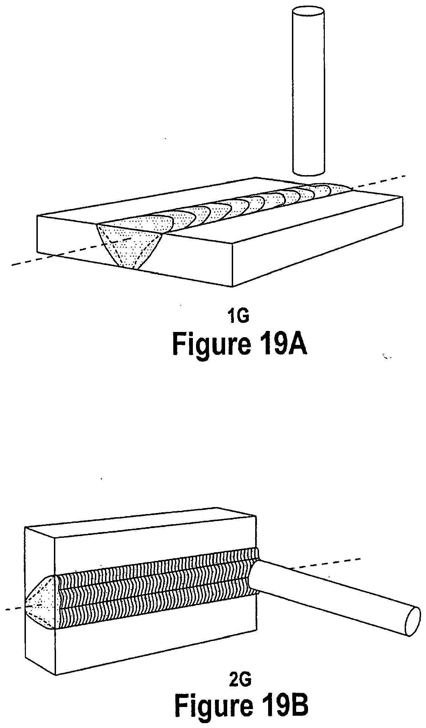

For welding LNG storage tanks the, an embodiment of the present invention provides a yield strength of at least 430 MPa, a tensile strength of at least 690 MPa and a Charpy V-Notch (CVN) toughness is at least 70 Joules at -196 degrees C. In another embodiment, the tensile strength is in the range of 690 to 825 MPa. As discussed previously, this can be achieved when welding in either the 1G or 2G positions (shown in Figures 19A and 19B, respectively) and 3G or "out-of-position" welding positions.

However, it will be appreciated that the present invention can be used in applications on pipes having thicknesses greater than or less than 0.75 inches. In one embodiment, the resulting bead that is formed generally has a tensile strength greater than 70 ksi and in certain applications, greater than about 90 ksi. In particular aspects, the melting current can be negative. If the melting current is negative, the metal transferring operation can be performed by a positive current. The metal transferring can however, be performed by a positive current independent of the melting current. When performing the previously described method, in one embodiment the average arc length is less than 0.30 inches, and in a further embodiment is less than 0.20 inches, and in another embodiment is less than 0.10 inches. In an embodiment of the previously described method, the rate of the short circuit events is automatically controlled. The rate of short circuit events is generally from about 40 to about 100 cycles per second.

In other embodiments, the previously described concepts, i.e. using the power sources and control techniques in combination with the electrode compositions noted herein, can be utilized to produce a weld metal having a minimum Charpy V-Notch toughness of 60J at -20°C. Similarly, the methods can be used to produce a weld metal having a minimum Charpy V-Notch toughness of 40J at -40°C. And, the methods can be used to produce a weld metal having a tensile strength exceeding 90 ksi. Thus, thin pipe of less than about 0.75 inches can be used with the resultant savings. No shielding gas is needed, so the cost of on site gas is eliminated, or greatly reduced. Further, welding flexibility is achieved in those applications normally limited, such as SAW, and welding defects and inconsistencies are avoided in welding applications such as SMAW.

Additionally, as discussed above, an embodiment of the present can be used to produce a weld metal having a yield strength of at least 430 MPa, a tensile strength of at least 690 MPa and a Charpy V-Notch (CVN) toughness of at least 70 Joules at -196 degrees C. Therefore, this embodiment can be used in applications such as welding LNG storage tanks. In another embodiment, the tensile strength is in the range of 690 to 825 MPa.

The present application can be utilized in a wide array of applications. The system, process, and/or compositions described herein are particularly adapted for use in welding at least X80 pipe (the designation X80 being in accordance with the API 5L:2000 industry specification) with self-shielded flux core wire. However, the present invention can be utilized in conjunction with other pipe grades. The present invention can also be utilized in "root pass" or tack welding operations performed on pipes. The present invention can be utilized to melt greater amounts of welding wire with less arc force as compared to currently known practices of using a buried short arc for the initial welding pass. Yet another application for the present invention is in robotic welding applications for high speed welding of thin gauge metals.

### EXAMPLE

The following discussion is directed to an example of the present invention. The present invention is not limited to the embodiment and results discussed below, but the following discussion is provided to demonstrate the results achievable from an exemplary embodiment of the present invention.

A series of test welds were made using an embodiment of the present invention, in which a self-shielded, flux cored electrode was used in a short arc welding process. In some tests a 0.062 inch diameter Lincoln Innershield NR-233 was used. The welds were made at a constant wire feed speed and travel speed. The welds were bead on plate welds, having three passes side-by-side, then two passes side-by-side in a second layer on top of the first three passes. The plate surfaces were shot blasted prior to welding to remove scale and dirt. The weld metal layer in the second layer was analyzed for nitrogen content. Because no nitrogen was intentionally incorporated in the electrodes

For welding LNG storage tanks the, an embodiment of the present invention provides a yield strength of at least 430 MPa, a tensile strength of at least 690 MPa and a Charpy V-Notch (CVN) toughness is at least 70 Joules at -196 degrees C. In another embodiment, the tensile strength is in the range of 690 to 825 MPa. As discussed previously, this can be achieved when welding in either the 1G or 2G positions (shown in Figures 19A and 19B, respectively) and 3G or "out-of-position" welding positions.

However, it will be appreciated that the present invention can be used in applications on pipes having thicknesses greater than or less than 0.75 inches (1.9 cm). In one embodiment, the resulting bead that is formed generally has a tensile strength greater than 70 ksi and in certain applications, greater than about 90 ksi. In particular aspects, the melting current can be negative. If the melting current is negative, the metal transferring operation can be performed by a positive current. The metal transferring can however, be performed by a positive current independent of the melting current. When performing the previously described method, in one embodiment the average arc length is less than 0.30 inches (0.3 cm), and in a further embodiment is less than 0.20 inches (0.5 cm), and in another embodiment is less than 0.10 inches (0.25 cm). In an embodiment of the previously described method, the rate of the short circuit events is automatically controlled. The rate of short circuit events is generally from about 40 to about 100 cycles per second.

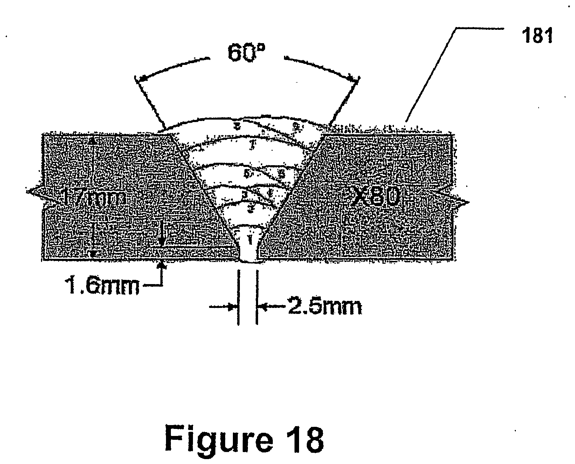

In other embodiments, the previously described concepts, i.e. using the power sources and control techniques in combination with the electrode compositions noted herein, can be utilized to produce a weld metal having a minimum Charpy V-Notch toughness of 60J at -20°C. Similarly, the methods can be used to produce a weld metal having a minimum Charpy V-Notch toughness of 40J at -40°C. And, the methods can be used to produce a weld metal having a tensile strength exceeding 90 ksi. Thus, thin pipe of less than about 0.75 inches (1.9 cm) can be used with the resultant savings. No shielding gas is needed, so the cost of on site gas is eliminated, or greatly reduced. Further, welding flexibility is achieved in those applications normally limited, such as SAW, and welding defects and inconsistencies are avoided in welding applications such as SMAW. and the weld structure was as shown in FIG. 18. Further, as shown in FIG. 18, the weld passes are shown as passes #1 through #9. Table 2 shows the mechanical test results of the weld performed in accordance with Table 1. Finally, Table 3 shows the weld deposit chemistry of the example set forth in Table 1.

**Table 1 - Welding Procedures:**

| | | |
|---|---|---|
| Pass 1 (Root) | 0.045" Pipeliner® 70S-G (ER70S-G) | |
| Semi-automatic | 155A, 17.5 VDC+ | |
| Vertical-down | WFS 4.1 m/min (160 in/min) | |
| 100% CO₂ | STT II: 400A Peak, 60A Back, 0 Tail | |
| Pass 2-9 (Hot-Cap) | 2.0 mm Pipeliner® M2M80 (FCAW-S) | |
| Semi-automatic | 200A, 2 1V | |
| Vertical-down | WFS 2.3 to 2.5 m/min (90 to 100 in/min) | |
| Position | 5G Horizontal Fixed | |
| Heat Input (avg.) | 1.4 kJ/mm | 35 kJ/in |
| Preheat/Interpass | 65.56/121.1 °C | 150/250 °F |
| Pipe | API 5L X80 | DSAW (Napa) |
| R_{p0.2} (YS_{0.2%}) | 608 MPa | 88.1 ksi |
| Diameter x Wall | 915 x 17 mm | 36 x 0.667 in |

**Table 2: Mechanical Test Results (weld metal - as welded):**

| Tensile (ASTM E8) All weld metal, 6.35 mm (0.25 in) dia. | | | |
|---|---|---|---|
| R_{p0.2} (YS_{0.2%}) | average | 656 MPa | 95 ksi |
| | min-max | 649-662 MPa | 94-96 ksi |
| Rₘ (UTS) | average | 725 MPa | 105 ksi |
| | min-max | 718-731 MPa | 104-106 ksi |
| A₅ (Elong.) | average | 25% | 25% |
| | min-max | 25-26% | 25-26% |

| Charpy V-Notch (ASTM E23) Mid-wall, 10mm x 10mm | | | |
|---|---|---|---|
| -20°C (-4°F) | average | 97 J | 75 ft-lb |
| | min-max | 83-117 J | 64-91 ft-lb |
| -29°C (-20°F) | average | 59 J | 46 ft-lb |
| | min-max | 35-77 J | 27-60 ft-lb |
| -40°C (-40°F) | average | 41 J | 32 ft-lb |
| | min-max | 34-46 J | 26-36 ft-lb |

**Table 3: Weld Deposit Chemistry (SPJ):**

| Chemistry (ASTM E350) | |
|---|---|
| Element | % |
| C | 0.026 |
| Mn | 3.43 |
| Si | 0.10 |
| P | 0.010 |
| S | 0.009 |
| Ni | 0.77 |
| Cr | 0.03 |
| Mo | 0.01 |
| B | 0.0022 |
| Ti | 0.010 |
| V | 0.02 |
| Nb | 0.016 |
| Al | 1.06 |

The above example is intended to merely exemplary of an embodiment of the present invention, and is not intended to limit the scope of the present invention in any way.

In an embodiment of the present invention the short arc welding device is a welding device which employs a welding gun to continuously advance the electrode toward the workpiece to be welded. This is similar to a MIG welding process. However, as indicated above, the process is a gas-less process using self-shielding flux-cored electrodes. Further, the method of welding using the short arc welding system and the disclosed electrode is a welding method similar to MIG welding, in that the electrode is continuously advanced through a welding gun.

Moreover, further to the discussions above, in further embodiments of the present invention, the welding device can be an engine driven machine or a fuel cell, or battery base, driven machine. Additionally, the present invention may also be employed with automatic or robotic welding machines.

The present invention has been described with certain embodiments and applications. These can be combined and interchanged without departing from the scope of the invention as defined in the appended claims. The systems, methods, electrodes and combinations thereof as defined in these appended claims are incorporated by reference herein as if part of the description of the novel features of the synergistic invention.

The present invention has been described with certain embodiments and applications. These can be combined and interchanged without departing from the scope of the invention as defined in the appended claims.

**Reference numbers**

| | | | |
|---|---|---|---|
| I | stage | 50 | carbon steel sheath |
| II | stage | 52 | internal flux core |
| III | stage | 60 | shunt |
| IV | stage | 62 | current device |
| A | system | 64 | line |
| B | power source | 70 | device |
| C | controller | 72 | output line |
| E | electrode | 100 | waveform generator |
| W | end of wire | 100a | output line |
| WP | workpiece | 100b | line |
| 10 | line | 102 | memory unit |
| 14 | inverter | 102a | line |
| 14a | line | 104 | circuit |
| 14b | line | 104a | select signal |
| 20 | buck converter | 110 | error amplifier |
| 22 | output line | 110a | line |
| 24 | output line | 112 | modulator |
| 30 | speed inverter | 112a | line |
| 32 | output lead | 120 | circuit detector |
| 34 | output lead | 122 | line |
| 40 | drum | 150 | circuit |
| 42 | contact tip | 152 | multiplier |
| 154 | line | 216a | current section |
| 156 | integrator | 216b | second current section |
| 156a | output line | 218 | transition section |
| 160 | block | 220 | molten metal |
| 162 | line | 222 | neck |
| 164 | line | 230 | waveform |
| 170 | line | 232 | negative section |
| 172 | circuit | 234 | positive section |
| 172a | input line | 236 | short |
| 172b | line | 238 | voltage section |
| 172c | output line | 240 | section |
| 174 | circuit | 250 | circuit |
| 180 | digital register | 254 | line |
| 182 | output | 260 | timer |
| 190 | register | 262 | line |
| 192 | line | 270 | register |
| 194 | comparator | 272 | line |
| 200 | circuit | 280 | summing junction |
| 210 | waveform | 282 | digital filter |
| 212 | negative melting pulse | 284 | output |
| 212a | start position | 290 | update circuit |
| 212b | stop position | 300 | block |
| 214 | transfer section | 310 | feedback loop |
| 216 | circuit pulse | 312 | line |
| 320 | feedback loop | 610a | particles |
| 322 | line | 610b | particles |
| 330 | error amplifier | 610c | particles |
| 332 | output | 630 | molten metal |
| 400 | waveform | 640 | melted upper end |
| 402 | melting pulse | 650 | molten metal |
| 402a | positive current | 700 | electrode |
| 404 | current section | 710 | outer steel sheath |
| 410 | clearing pulse | 720 | core |
| 412 | ramp area | 730 | workpiece |
| 414 | stepped area | 740 | weld metal |
| 420 | pipe section | | |
| 422 | pipe section | | |
| 424 | open root | | |
| 500 | sheath | | |
| 510 | welding system | | |
| 520 | torch | | |
| 530 | cored electrode | | |
| 540 | power source | | |
| 550 | rectifier | | |
| 560 | rectifier | | |
| 600 | sheath | | |
| 610 | filled core | | |

## Claims

1. A method of welding a workpiece (WP); the method comprising:
advancing a self-shielding electrode (530) from a welding device (510) toward the workpiece (WP); and
employing an AC-short arc welding process to weld the workpiece (WP) using the advancing self-shielded electrode (530),
wherein the weld has a Charpy V-Notch toughness of at least 70 joules at - 196 degrees C;
an average arc length (LA) during said short arc welding process is up to 0,3 inches (0,75 cm);
no externally supplied shielding is used during said employing step to the workpiece (WP); and
varying the waveform balance and DC offset of the AC waveform to influence the weld metal nitrogen recovery, wherein
the "waveform balance" is the percentage of the AC cycle time when the electrode polarity is positive, and
the "DC offset" is the measure of the degree to which the amplitudes of the positive and negative portions of the waveform are unequal.

2. The method of claim 1, **characterized in that** the weld has a yield strength of at least 430 MPa, a tensile strength of at least 690 MPa, and/or a tensile strength in the range of 690 to 825 MPa.

3. The method of claim 1 or 2, **characterized in that** the electrode (530) is a flux cored self-shielding electrode.

4. The method of one of the claims 1 to 3, **characterized in that** the electrode (530) is advanced through a welding gun (520) toward the workpiece (WP).

5. The method of one of the claims 1 to 4, **characterized in that** the self-shielding electrode (530) is a self-shielded flux cored arc welding wire.

6. The method of one of the claims 1 to 5, **characterized by**:
controlling a melting pulse (402) of the short arc welding process, where the melting pulse (402) is followed by a low current transfer cycle, by measuring a duration time between said melting pulse (402) and a short circuit during said transfer cycle;
setting a desired time for said duration;
creating a corrective signal by comparing said measured duration and said set desired time; and
adjusting a parameter of said melting pulse (402) based upon said corrective signal.

7. The method of one of the claims 1 to 6, **characterized in that** an average arc length (LA) during said short arc welding process is up to 0.2 inches (0.5 cm), or up to 0.1 inches (0.25 cm).

8. A welding apparatus; comprising:
a short arc welding system which advances an electrode (530) toward a workpiece (WP) to be welded;
a power source and a control, wherein said electrode (530) is a self-shielding electrode; and
**characterized in that** said short arc welding system using the power source and control is configured to perform the method of one of the preceeding claims.

## Patentansprüche

1. Verfahren zum Schweißen eines Werkstücks (Work Piece, WP), wobei das Verfahren Folgendes umfasst:
Voranschieben einer selbstabschirmenden Elektrode (530) aus einer Schweißvorrichtung (510) in Richtung des Werkstücks (WP); und
Verwenden eines Wechselstrom-Kurzlichtbogenschweißprozesses zum Schweißen des Werkstücks (WP) unter Verwendung der vorangeschobenen selbstabgeschirmten Elektrode (530), wobei die Schweißnaht eine Kerbschlagzähigkeit nach Charpy von mindestens 70 Joules bei -196°C besitzt;
eine durchschnittliche Lichtbogenlänge (LA) während des Kurzlichtbogenschweißprozesses bis zu 0,3 Inch (0,75 cm) beträgt;
für das Werkstück (WP) während des Verwendungsschrittes keine von außen zugeführte Abschirmung verwendet wird; und
Variieren der Wellenformbalance und des Gleichstromversatzes der Wechselstromwellenform zum Beeinflussen der Schweißmetallstickstoffrückgewinnung, wobei
die "Wellenformbalance" der Prozentsatz der Wechselstromzykluszeit ist, wenn die Elektrodenpolarität positiv ist, und
der "Gleichstromversatz" das Maß des Grades ist, in dem die Amplituden der positiven und negativen Abschnitte der Wellenform ungleich sind.

2. Verfahren nach Anspruch 1, **dadurch gekennzeichnet, dass** die Schweißnaht eine praktische Fließgrenze von mindestens 430 MPa, eine Zugfestigkeit von mindestens 690 MPa und/oder eine Zugfestigkeit im Bereich von 690 bis 825 MPa hat.

3. Verfahren nach Anspruch 1 oder 2, **dadurch gekennzeichnet, dass** die Elektrode (530) eine selbstabschirmende Flussmittelkern-Elektrode ist.

4. Verfahren nach einem der Ansprüche 1 bis 3, **dadurch gekennzeichnet, dass** die Elektrode (530) durch eine Schweißpistole (520) in Richtung des Werkstücks (WP) vorangeschoben wird.

5. Verfahren nach einem der Ansprüche 1 bis 4, **dadurch gekennzeichnet, dass** die selbstabschirmende Elektrode (530) ein selbstabgeschirmter Flussmittelkern-Lichtbogenschweißdraht ist.

6. Verfahren nach einem der Ansprüche 1 bis 5, **gekennzeichnet durch**:
Steuern eines Schmelzimpulses (402) des Kurzlichtbogenschweißprozesses, wobei auf die Schmelzimpulse (402) ein Niedrigstromtransferzyklus folgt, durch
Messen einer Zeitdauer zwischen dem Schmelzimpuls (402) und einem Kurzschluss während des Transferzyklus;
Einstellen einer gewünschten Zeit für die Dauer;
Erzeugen eines Korrektursignals durch Vergleichen der gemessen Dauer und der eingestellten gewünschten Zeit;
und
Justieren eines Parameters des Schmelzimpulses (402) auf der Basis des Korrektursignals.

7. Verfahren nach einem der Ansprüche 1 bis 6, **dadurch gekennzeichnet, dass** eine durchschnittliche Lichtbogenlänge (LA) während des Kurzlichtbogenschweißprozesses bis zu 0,2 Inch (0,5 cm) oder bis zu 0,1 Inch (0,25 cm) beträgt.

8. Schweißvorrichtung, die Folgendes umfasst:
ein Kurzlichtbogenschweißsystem, das eine Elektrode (530) in Richtung eines zu schweißenden Werkstücks (WP) voranschiebt;
eine Stromquelle und eine Steuerung, wobei die Elektrode (530) eine selbstabschirmende Elektrode ist;
und
**dadurch gekennzeichnet, dass** das Kurzlichtbogenschweißsystem, das die Stromquelle und die Steuerung verwendet, dafür konfiguriert ist, das Verfahren nach einem der vorangehenden Ansprüche auszuführen.

## Revendications

1. Procédé de soudage d'une pièce d'ouvrage (WP), le procédé comprenant :
l'avancée d'une électrode auto-blindée (530) depuis un dispositif de soudage (510) vers la pièce d'ouvrage (WP) ; et
l'emploi d'un processus de soudage à arc court CA pour souder la pièce d'ouvrage (WP) en utilisant l'électrode auto-blindée avancée (530),
dans lequel la soudure a une résistance à l'effet d'entaille Charpy V d'au moins 70 joules à -196 degrés Celsius ;
une longueur moyenne d'arc (LA) au cours dudit processus de soudage à arc court est jusqu'à 0,3 pouce (0,75 cm) ;
aucun blindage fourni par voie externe n'est utilisé au cours de ladite étape de l'emploi sur la pièce d'ouvrage (WP) ; et
la variation de l'équilibre de forme d'onde et du décalage CC de la forme d'onde CA pour influencer la récupération d'azote de métal de soudage, dans lequel « l'équilibre de forme d'onde » est le pourcentage du temps de cycle CA lorsque la polarité d'électrode est positive, et
le « décalage CC » est la mesure du degré auquel les amplitudes des portions positives et négatives de la forme d'onde sont inégales.

2. Procédé selon la revendication 1, **caractérisé en ce que** la soudure a une limite d'élasticité d'au moins 430 MPa, une résistance à la traction d'au moins 690 MPa, et/ou une résistance à la traction dans la plage de 690 à 825 MPa.

3. Procédé selon la revendication 1 ou 2, **caractérisé en ce que** l'électrode (530) est une électrode auto-blindée à fil fourré.

4. Procédé selon l'une des revendications 1 à 3, **caractérisé en ce que** l'électrode (530) est avancée à travers un pistolet de soudage (520) vers la pièce d'ouvrage (WP).

5. Procédé selon l'une des revendications 1 à 4, **caractérisé en ce que** l'électrode auto-blindée (530) est un fil de soudage à arc à fil fourré auto-blindé.

6. Procédé selon l'une des revendications 1 à 5, **caractérisé par** :
la commande d'une impulsion de fusion (402) du processus de soudage à arc court, où l'impulsion de fusion (402) est suivie d'un cycle de transfert à faible intensité, par la mesure d'une durée entre ladite impulsion de fusion (402) et un court-circuit au cours dudit cycle de transfert ;
le réglage d'un temps souhaité pour ladite durée ;
la création d'un signal correctif par la comparaison de ladite durée mesurée et dudit temps souhaité réglé ; et
l'ajustement d'un paramètre de ladite impulsion de fusion (402) sur la base dudit signal correctif.

7. Procédé selon l'une des revendications 1 à 6, **caractérisé en ce qu'**une longueur moyenne d'arc (LA) au cours dudit processus de soudage à arc court est jusqu'à 0,2 pouce (0,5 cm) ou jusqu'à 0,1 pouce (0,25 cm).

8. Appareil de soudage, comprenant :
un système de soudage à arc court qui avance une électrode (530) vers une pièce d'ouvrage (WP) à souder ;
une source de puissance et une commande, dans lequel ladite électrode (530) est une électrode auto-blindée ; et
**caractérisé en ce que** ledit système de soudage à arc court utilisant la source de puissance et la commande est configuré pour effectuer le procédé selon l'une des revendications précédentes.
